# EUROPÄISCHE PATENTSCHRIFT

(11) **EP 4 128 715 B1**
(45) Veröffentlichungstag und Bekanntmachung des Hinweises auf die Patenterteilung: **30.07.2025**
(21) Anmeldenummer: 21715170.3
(22) Anmeldetag: 22.03.2021
(51) Int. Cl.: H04L 67/125, H04L 67/5651, H04L 67/568

(54) **DATENERFASSUNGSVORRICHTUNG FÜR MOBILE VORRICHTUNGEN, VERFAHREN ZUR DURCHFÜHRUNG EINER VORABANALYSE BEI EINER DATENERFASSUNGSVORRICHTUNG, FAHRZEUG SOWIE ENTSPRECHEND AUSGELEGTES COMPUTERPROGRAMM**
DATA ACQUISITION DEVICE FOR MOBILE DEVICES, METHOD FOR CONDUCTING A PRELIMINARY ANALYSIS IN A DATA ACQUISITION DEVICE, VEHICLE, AND COMPUTER PROGRAM DESIGNED ACCORDINGLY
DISPOSITIF D'ACQUISITION DE DONNÉES POUR DISPOSITIFS MOBILES, PROCÉDÉ DE RÉALISATION D'UNE ANALYSE PRÉLIMINAIRE DANS UN DISPOSITIF D'ACQUISITION DE DONNÉES, VÉHICULE ET PROGRAMME INFORMATIQUE CONÇU EN CONSÉQUENCE

(30) Priorität: 27.03.2020 DE 102020108581
(43) Veröffentlichungstag der Anmeldung: 08.02.2023
(73) Patentinhaber: ZF CV Systems Global GmbH, 3006 Bern (CH)
(72) Erfinder: KÖNIG, Christoph, 30159 Hannover (DE)
(74) Vertreter: Schäferjohann, Volker
(86) Internationale Anmeldenummer: PCT/EP2021/057196
(87) Internationale Veröffentlichungsnummer: WO 2021/191112

(56) Entgegenhaltungen:
- DE-A1- 102014 004 182
- DE-A1- 102017 206 073

## Beschreibung

Die Erfindung betrifft das technische Gebiet von Systemen zur Datenerfassung bei dem Testen und/oder im Betrieb von mobilen Vorrichtungen, insbesondere bei Fahrzeugen. Es geht z.B. darum ein bestimmtes Verhalten eines Regelsystems der mobilen Vorrichtung zu testen und/oder den laufenden Betrieb des Systems für Optimierungen zu beobachten. Um das Regelverhalten erfassen zu können, werden dabei Datenreihen aufgestellt und allgemeine Vorschriften, wie aus einer Datenreihe ein Beurteilungswert gebildet werden kann. Klassische Funktionen sind z.B. Durchschnittwert, Minimum/Maximum, Anzahl der Elemente oder Summe der Elemente. Statistische Auswerteverfahren können dabei ebenfalls eingesetzt werden, um Beurteilungswerte zu erlangen. Als Beispiele solcher Beurteilungswerte werden genannt: Modus, Median, arithmetisches Mittel, Standardabweichung, oberes und unteres Quantil, etc. Bei dem üblichen Ansatz zur Datenerfassung werden möglichst alle anfallenden Daten erfasst, abgespeichert und an einen Backend-Server übertragen, wo sie dann analysiert werden.

Aus der DE 10 2017 201 804 A1 ist ein Verfahren zum Erfassen von Daten eines Fahrzeuges bekannt, mit dem Sensor-Daten ereignis-basiert erfasst werden und in einem Speicher abgelegt werden.

Aus der US 2012 053 778 A1 ist ein Verfahren und eine Vorrichtung für die Ferndiagnose von Fahrzeugen bekannt. Dabei werden anormale Ereignisse erfasst und Daten vor und nach dem Ereignis in einem Datensatz gespeichert, der an eine externe Stelle übertragen wird. Dort findet die Analyse der Daten statt. Es können dann Werkstattaufenthalte geplant werden.

Aus der DE 10 2008 047 727 A1 ist ein Datenschreiber zur Aufzeichnung von kritischen Fahrsituationen bekannt, der die Messdaten eines Sensorsystems aufzeichnet, wenn eine kritische Fahrsituation erkannt wurde.

Aus der DE 10 2008 015 352 A1 ist ein Computerprogramm bekannt, dass veranlasst, dass der über den Datenbus des Fahrzeuges ausgetauschte Busverkehr aufgezeichnet wird und bei Auftreten eines Trigger-Ereignisses das Überschreiben des Ringspeichers gestoppt wird, um den Inhalt in einen nichtflüchtigen Speicher zu übertragen.

Aus der DE 10 2017 206 073 A1 ist ein Verfahren zur Datenerhebung bekannt, bei dem die zu übertragende Datenmenge gering ist. Dazu wird von einer zentralen Stelle der zu sendende Datentyp angefordert.

Die bekannten Lösungen sind mit verschiedenen Nachteilen behaftet. Dies wurde im Rahmen der Erfindung erkannt. Bei den heute bekannten Datenerfassungssystemen zum Testen verschiedener Systeme mobiler Vorrichtungen, insbesondere Fahrzeuge, besteht das Problem, dass diese den ganzen Datenverkehr auf einem internen Kommunikationsbus aufzeichnen, abspeichern, ggfs. an eine externe Recheneinheit übertragen, wo dann die Datenauswertung durchgeführt wird. Dies ist ein hoher Aufwand für die Datenspeicherung, Datenübertragung und Datenauswertung.

Es besteht also der Bedarf für weitere Verbesserungen bei Datenerfassungssystemen.

Die Erfindung setzt sich zur Aufgabe, einen solchen Ansatz zu finden. Diese Aufgabe wird durch eine Datenerfassungsvorrichtung gemäß Anspruch 1, ein Verfahren zur Durchführung einer Vorabanalyse bei einer Datenerfassungsvorrichtung gemäß Anspruch 11 und ein Fahrzeug gemäß Anspruch 12 sowie ein Computerprogramm gemäß Anspruch 13 gelöst.

Die abhängigen Ansprüche beinhalten vorteilhafte Weiterbildungen und Verbesserungen der Erfindung entsprechend der nachfolgenden Beschreibung dieser Maßnahmen.

In einer Ausprägung besteht die Erfindung in einer Datenerfassungsvorrichtung für mobile Vorrichtungen. Diese Datenerfassungsvorrichtung ist mit einer Recheneinheit und einer Speichereinheit ausgestattet. Sie weist weiterhin ein Kommunikationsmodul auf, das zur Übertragung erfasster Daten an einen Backend-Server eingerichtet ist. Zusätzlich ist eine Busschnittstelle vorhanden, die zum Empfang von Botschaften, die über einen internen Kommunikationsbus der mobilen Vorrichtung übertragen werden dient. Dabei ist die Recheneinheit eingerichtet, mit den in den Botschaften empfangenen Daten eine Datenreihe zu bilden und in der Speichereinheit abzuspeichern. Eine Besonderheit besteht darin, dass die Recheneinheit ausgelegt ist eine Vorabanalyse der abgespeicherten Datenreihe durchzuführen, um wenigstens einen interessierenden Bereich der Datenreihe zu extrahieren und an das Kommunikationsmodul weiterzuleiten, das eingerichtet ist den wenigstens einen extrahierten Bereich der Datenreihe an den Backend-Server zu übertragen. Diese Vorgehensweise entspricht einer Datenaggregation. Wenn mehrere Bereiche interessieren, werden diese zusammengefasst und übertragen. Die nicht interessierenden Bereiche werden nicht übertragen. Diese Form der verbesserten Datenerfassungsvorrichtung bietet den Vorteil, dass wesentlich weniger Daten über die Drahtlosschnittstelle zu dem Backend-Server übertragen werden müssen. Gleichzeitig wird der Speicheraufwand auf Seiten des Backend-Servers beträchtlich verringert und es wird auch der Aufwand für die Datenanalyse auf Seiten des Backend-Servers ebenfalls verringert. Am Beispiel des Tests eines Bremssystems wird dieser Vorteil besonders deutlich. Der Bremsvorgang ist kurz gegenüber der ganzen Testfahrt. Wenn nur die interessierenden Daten durch Vorabanalyse ausgewählt und übertragen werden, kann der Datenübertragungsaufwand um mehr als 90% reduziert werden. Entsprechend verringern sich der Speicheraufwand und der Analyseaufwand beim Backend-Server.

Es ist vorteilhaft, dass die erfassten Datenreihen in Form von Zeitreihen abgespeichert werden. Wenn die Messzeitpunkte über den internen Kommunikationsbus nicht übertragen werden, ist es vorteilhaft, wenn die Recheneinrichtung ausgelegt ist die Zeitpunkte des Empfangs der empfangenen Botschaften jeweils in der Datenreihe bei den Daten der jeweils empfangenen Botschaft mit zu notieren. Durch Mitnotieren der Zeiten wird die zeitliche Reihenfolge der Daten dokumentiert und es kann immer der Bezug zu den verschiedenen Testphasen hergestellt werden.

In einer erweiterten Ausführungsform der Erfindung ist es vorteilhaft, wenn das Kommunikationsmodul eingerichtet ist wenigstens eine Konfigurationsnachricht zu empfangen, wobei die wenigstens eine Konfigurationsnachricht eine Vorschrift beinhaltet, wie die Daten einer über den internen Kommunikationsbus übertragenen Botschaft ausgewertet sollen. Dies ist wichtig, wenn nicht von allen zu empfangenden Botschaften in der Datenerfassungseinrichtung hinterlegt ist, wie die Daten in den Botschaften formatiert sind. Es können Integerzahlen, Gleitkommazahlen, usw. in den Botschaften enthalten sein und die Datenerfassungsvorrichtung kann durch die Konfigurationsnachricht in die Lage versetzt werden die Daten in das für eine Analyse der Daten nötige Format zu wandeln.

Diesbezüglich ist es vorteilhaft, wenn die Recheneinrichtung ausgelegt ist die Datenreihe mit den Daten der empfangenen Botschaften entsprechend der Vorschrift in der wenigstens einen Konfigurationsnachricht aufzustellen. Zum Beispiel kann durch die Anwendung der Vorschrift Multiplikation der empfangenen Integer-Zahl mit einem Skalierungsfaktor und Addition eines Offset der eigentliche Messwert in einer Messeinheit als Gleitkommazahl zurückgewonnen werden.

Ein typischer Anwendungsfall, wo die Datenerfassungsvorrichtung vorteilhaft eingesetzt werden kann, entspricht dem Fall, wo die erfassten Daten gemessenen Daten von Sensoren entsprechen oder von Recheneinheiten berechnete Daten betreffen. Die berechneten Daten dabei können von gemessenen Daten abgeleitet sein.

Solche Datenerfassungsvorrichtungen können sehr vorteilhaft zum Testen von Fahrzeugsystemen eingesetzt werden. Dabei entspricht dann die mobile Vorrichtung einem Fahrzeug und der interne Kommunikationsbus kann z.B. einem CAN-Bus des Fahrzeuges, entsprechend Controller Area Network, entsprechen. Es werden heute aber noch verschiedene andere Bussysteme eingesetzt, an die ebenfalls Datenerfassungsvorrichtungen angeschlossen werden können. Als weitere Beispiele, welche anstelle des CAN-Bus bzw. der CAN-Bus Leitung des Fahrzeuges eingesetzt werden können, werden genannt, Flexray-Bus, Lin-Bus (Local Interconnect Network), Ethernet-Bus, Automotive Ethernet, MOST-Bus (Media Oriented System Transport), usw.

In einem Beispiel kann das Fahrzeug einem Zugfahrzeug oder einem Anhängerfahrzeug entsprechen und das Anhängerfahrzeug mit einem druckluftbetriebenen Bremssystem ausgestattet sein. Mit der erfindungsgemäßen Datenerfassungsvorrichtung wird dann das Bremssystem des Anhängerfahrzeuges oder des Zugfahrzeuges getestet.

Zum Testen des Bremssystem des Anhängerfahrzeuges ist es vorteilhaft, die Datenerfassungsvorrichtung an den internen CAN-Bus des Anhängerfahrzeuges anzuschließen, an den ein Bremssteuergerät angeschlossen ist, das die Daten von einer Anzahl von an das Bremssteuergerät angeschlossenen Bremsdrucksensoren und/oder Raddrehzahlsensoren über den CAN-Bus bzw. die CAN-Bus Leitung überträgt. Die Datenerfassungsvorrichtung zeichnet dann die Daten von den Bremsdrucksensoren und/oder Raddrehzahlsensoren auf.

Für den Test und/oder die Zustandsbeurteilung des Bremssystems ist es vorteilhaft, wenn die wenigstens eine Konfigurationsnachricht die an die Datenerfassungsvorrichtung gesendet wird wenigstens den Botschafts-Identifizierer der CAN-Botschaft beinhaltet, mit der der gemessene Bremsdruck eines Bremsdrucksensors übertragen wird sowie eine Angabe über die minimale relative Bremsdruckänderung die gegenüber dem unmittelbar vorhergehenden Messwert des Bremsdrucks noch tolerierbar ist, um den Messwert noch einem Bereich relativ konstanten Bremsdrucks zuordnen zu können. Der Test des Bremssystems beinhaltet die Fragestellung, wie die Verzögerung bei einem konstanten Bremsdruck ist. Dafür ist die Konfigurationsnachricht ausgelegt um die interessierenden Bereiche für diese Fragestellung auszuwählen.

Diesbezüglich ist es ebenfalls vorteilhaft, wenn die Vorschrift in der wenigstens einen Konfigurationsnachricht wenigstens den Botschafts-Identifizierer der CAN-Botschaft beinhaltet, mit der die gemessene Raddrehzahl eines Raddrehzahlsensors übertragen wird. So können dann Bereiche ausgeschlossen werden, bei denen die Betätigung der Bremse im Stillstand des Fahrzeug erfolgt.

In einer anderen Ausprägung betrifft die Erfindung ein Verfahren zur Durchführung einer Vorabanalyse bei einer erfindungsgemäßen Datenerfassungsvorrichtung. Diesbezüglich ist es vorteilhaft dass die Vorabanalyse einen Schritt der Datenaggregation beinhaltet. Damit kann der gesamte Datensatz auf bestimmte interessierende Bereiche beschränkt werden.

Der Schritt der Datenaggregation beinhaltet einen Schritt der Berechnung der relativen Änderung der Daten in der Datenreihe.

Zudem wird zur Datenaggregation ein Schritt der Zuordnung einer Markierung zu einem Datum in der Datenreihe durchgeführt, bei dem die Markierung dem jeweiligen Datum zugeordnet wird, wenn die relative Änderung des Datums gegenüber dem Vorgängerwert kleiner als ein minimal zulässiger Referenzwert ist. So kann in dem großen Datensatz ein interessierender Bereich schneller aufgefunden werden.

Die Vorabanalyse beinhaltet einen Schritt der Zählung der unmittelbar aufeinanderfolgenden markierten Daten in der Datenreihe, bei denen gleichzeitig die mobile Vorrichtung noch in Bewegung ist. So kann in einem Beispiel der am längsten dauernde Bereich bestimmt werden, bei dem mit einem relativ konstanten Sollwert ein zu testendes System betätigt wird.

Der interessierende Bereich wird mit einem Schritt der Bestimmung des Bereiches in der Datenreihe bestimmt, in dem die maximale Anzahl unmittelbar aufeinanderfolgender markierter Daten enthalten ist.

Der Bereich der Datenreihe mit der maximalen Anzahl der unmittelbar aufeinanderfolgenden markierten Daten wird an einen Backendserver gesendet. Dort kann dann die Archivierung der Daten und die nachfolgende Analyse erfolgen.

In einer weiteren Ausprägung betrifft die Erfindung ein Fahrzeug, dass mit einer erfindungsgemäßen Datenerfassungsvorrichtung ausgestattet ist. Solche Datenerfassungsvorrichtungen können so auch serienmäßig zur Überwachung des Betriebes des Fahrzeuges eingesetzt werden.

Die Erfindung betrifft weiterhin ein Computerprogramm, das ausgelegt ist, bei Abarbeitung in einer Recheneinrichtung die Schritte des erfindungsgemäßen Verfahrens durchzuführen.

Ausführungsbeispiele der Erfindung sind in den Zeichnungen dargestellt und werden nachfolgend anhand der Figuren näher erläutert.

Es zeigen:
- Fig. 1: das Prinzip der Funkkommunikation zwischen einem Fahrzeug und einem Backend Server über ein öffentlich zugängliches Mobilfunksystem;
- Fig. 2: ein Schaltbild für die elektronische und pneumatische Ausstattung eines Anhänger-Fahrzeuges, das mit Druckluftbremssystem ausgestattet ist;
- Fig. 3: das grobe Format einer CAN-Bus Botschaft mit CAN-Bus Identifzierer und Nutzdatenfeld;
- Fig. 4: ein Beispiel einer Datenreihe zur Erfassung des Bremsverhaltens des Anhängerfahrzeuges;
- Fig. 5: ein Ablaufdiagramm für ein Computerprogramm mit dem eine erfindungsgemäße Vorverarbeitung der Datenreihen realisiert werden kann;
- Fig. 6: ein zugehöriges Messwertdiagramm zu der Datenreihe von Fig. 4 mit Darstellung des interessierenden Bereichs konstanten Bremsdrucks bei einem Bremsvorgang; und
- Fig. 7: ein anderes Messwertdiagramm zu einer anderen Messwertreihe mit Darstellung des interessierenden Bereichs konstanten Bremsdrucks bei einem Bremsvorgang.

Die vorliegende Beschreibung veranschaulicht die Prinzipien der erfindungsgemäßen Offenbarung. Es versteht sich somit, dass Fachleute in der Lage sein werden, verschiedene Anordnungen zu konzipieren, die zwar hier nicht explizit beschrieben werden, die aber Prinzipien der erfindungsgemäßen Offenbarung verkörpern und in ihrem Umfang ebenfalls geschützt sein sollen.

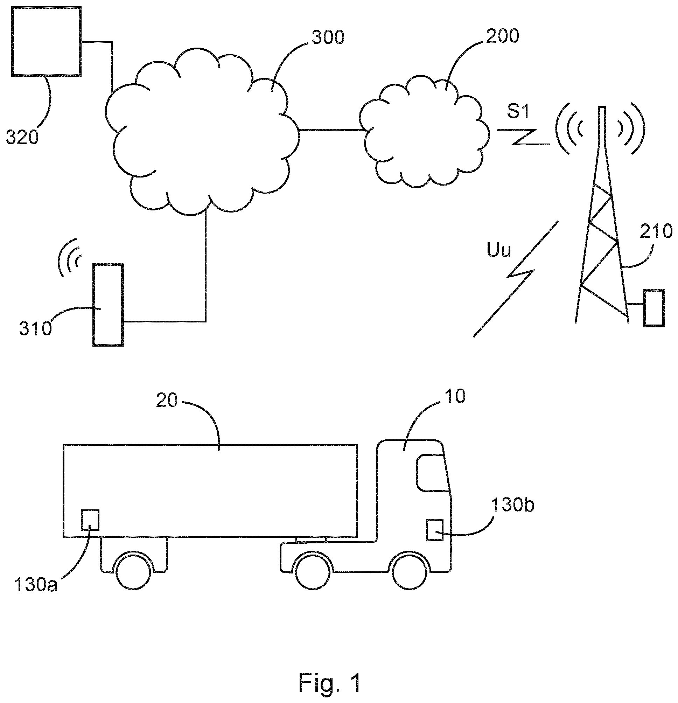

Fig. 1 zeigt eine Prinzipdarstellung für die Übertragung von Messwertreihen, die bei Testfahrten auf einer Teststrecke gemessen wurden. Dargestellt ist ein Nutzfahrzeug. Mit der Bezugszahl 10 ist das Zugfahrzeug eines Lastkraftwagens Lkw bezeichnet. Das Zugfahrzeug 10 zieht ein Anhängerfahrzeug 20. Sowohl Zugfahrzeug 10, als auch Anhängerfahrzeug 20 sind mit einer Datenerfassungseinheit 130a, 130b ausgestattet. Diese Datenerfassungseinheit 130a, 130b dient dazu die von Sensoren gelieferten Messwerte in Messwertreihen zu speichern. Genauso können auch allgemeine Datenreihen gespeichert werden, wobei die Daten von Recheneinheiten ggfs. aus Messwerten berechnet werden. Die Datenerfassungseinheit 130a, 130b kann auch dazu dienen eine Vorverarbeitung der Datenreihen durchzuführen.

Sie kann ebenfalls mit einem Kommunikationsmodul 136 ausgestattet sein, das dafür eingerichtet ist eine drahtlose Kommunikation durchzuführen. Die Kommunikation kann entweder über ein öffentliches zelluläres Mobilfunknetz wie LTE (Long Term Evolution) oder 5G durchgeführt werden oder über ein adhoc-Drahtlosnetzwerk, das für die Kommunikation von und zum Fahrzeug ausgelegt ist. Als Beispiel wird das WLAN p-Kommunikationssystem genannt, das in dem Standard IEEE 802.11 p spezifiziert ist. Über das Kommunikationsmodul 136 können die (vorverarbeiteten) Daten zu einem Backend-Server 320 übertragen werden, bei dem auch die Analyse der Datenreihen stattfindet.

Im Folgenden wird ein Ansatz für eine erweiterte Art der Datenaggregation beschrieben. Als Ziel gilt es, einen interessierenden Bereich aus einer Messreihe zu identifizieren und zu extrahieren. Die Vorschrift zur Aggregation auf der Einheit im Fahrzeug ist neben der Definition der Nachrichten und Auslösebedingung über eine Mobilfunkverbindung dynamisch konfigurierbar.

Für einen konkreten Anwendungsfall gilt es den längsten konstanten Druckverlauf während eines Bremsvorgangs zu bestimmen um genaue Informationen über die Verzögerung des Fahrzeugs in diesem Bereich zu erhalten. Es gibt somit eine Variable (Druckverlauf) die sich in einem bestimmten Bereich bewegen darf, um als konstant angesehen zu werden und den Zeitbereich für die Extraktion einer zweiten Variablen (Radgeschwindigkeit) festlegt. (Als Abwandlung könnten wir uns auch auf die Bestimmung des längsten linearen Bereichs einer Variablen fokussieren).

Fig. 1 zeigt dazu auch die Systemarchitektur für die Fahrzeugkommunikation mittels zellularen Mobilfunks. In Fig. 1 wurde als Beispiel ein Nutzfahrzeug dargestellt. Als Fahrzeug kämen allerdings beliebige andere Fahrzeuge ebenfalls in Betracht. Beispiele von weiteren Fahrzeugen sind: Personenkraftwagen (PKW), Busse, Landmaschinen, Baumaschinen, Campingfahrzeuge, Motorräder, Fahrräder, Roller, Rollstühle, Schienenfahrzeuge usw. Der Einsatz der Erfindung bei Fahrzeugen wäre allgemein bei Landfahrzeugen, Schienenfahrzeugen, Wasserfahrzeugen und Luftfahrzeugen einsetzbar. Zudem ist der Einsatz der Erfindung nicht nur auf Fahrzeuge beschränkt. Es kommt der Einsatz der Erfindung allgemein praktisch bei allen Gebieten der Elektrotechnik in Betracht. Als weitere Beispiele werden genannt Maschinen und Anlagen, Kleinelektrogeräte, Geräte der Unterhaltungselektronik, Geräte der weißen Ware, medizinische Geräte, usw. Die Aufzählung ist nicht abschließend gemeint. Die Anbindung von Geräten an die "Cloud" dringt auch in immer weitere Bereiche vor. Ein typisches Stichwort dafür ist der Begriff "Internet of Things" (IoT) durch den ein Trend in der Technik repräsentiert wird, dass immer mehr Geräte in Industrie, Handel und Haushalt durch den Einsatz neuerer Kommunikationstechniken wie 5G, LAN oder WLAN an das Internet angebunden werden. Die erfassten Datenreihen entsprechen Zeitreihen. Dies bedeutet, dass der jeweilige Messzeitpunkt bei Erfassung des jeweiligen Messwertes ebenfalls notiert wird. Bei einer Messreihe, bei der nur eine Messgröße erfasst wird, besteht die Messreihe aus einer Anzahl aufeinanderfolgender Messwerte mit den zugehörigen Messzeitpunkten.

Die Fahrzeuge 10 und 20 sind jeweils mit einer Datenerfassungseinheit 130a, 130b ausgestattet. In einem Beispiel soll das Bremssystem des Anhängerfahrzeuges 20 getestet werden. Der Bremsdruck wird vom Bremssystem im Anhängerfahrzeug 20 selbst bestimmt, allerdings wird die gewünschte Verzögerung des Fahrzeugs durch den Testfahrer vorgegeben, der bei dem Bremsvorgang auf das Bremspedal tritt. Die erste Datenerfassungseinheit 130a kann den Bremsbefehl mit erfassen, da der Bremsbefehl über einen Kommunikationsbus von dem Zugfahrzeug 10 zu dem Anhängerfahrzeug 20 übertragen wird. Soll das Bremssystem des Zugfahrzeuges 10 getestet werden, kann dafür im Zugfahrzeug 10 eine zweite Datenerfassungseinheit 130b angeschlossen werden, die genauso aufgebaut sein kann, wie die erste Datenerfassungseinheit 130a.

Alternativ kann auch nur eine zweite Datenerfassungseinheit 130b im Zugfahrzeug 10 zur Anwendung kommen, wenn beispielsweise das Anhängerfahrzeug 20 keine Datenerfassungseinheit 130a aufweist oder kein Anhängerfahrzeug 20 mit dem Zugfahrzeug 10 gekoppelt ist. Dementsprechend ist die Beschreibung des technischen Aufbaus und der Funktionalität der hier beispielhaft gewählten ersten Datenerfassungseinheit 130a als allgemeine Beschreibung einer erfindungsgemäßen Datenerfassungseinheit zu verstehen und somit auch auf die zweite Datenerfassungseinheit 130b zu übertragen und für diese mitzulesen.

Vorzugsweise sind die erste und die zweite Datenerfassungseinheit 130a, 130b identisch aufgebaut, wie folgt. Beide, d.h. die erste und/oder die zweite, Datenerfassungseinheiten 130a, 130b sind mit einem Kommunikationsmodul 136 mit entsprechender Antenneneinheit ausgestattet, so dass die Fahrzeuge 10, 20 an den verschiedenen Arten der Fahrzeug-zu-Infrastruktur-Kommunikation (V2X) teilnehmen kann. Fig. 1 zeigt, dass das Fahrzeug 10 mit der Mobilfunk-Basisstation 210 eines Mobilfunk-Anbieters kommunizieren kann.

Eine solche Basisstation 210 kann eine eNodeB-Basisstation eines LTE-Mobilfunkanbieters (Long Term Evolution) oder 5G Mobilfunkanbieters (Mobilfunksystem der 5. Generation) sein. Die Basisstation 210 und die entsprechende Ausrüstung ist Teil eines Mobilfunk-Kommunikationsnetzwerks mit einer Vielzahl von Mobilfunkzellen, wobei jede Zelle von einer Basisstation 210 bedient wird.

Die Basisstation 210 ist typischerweise nahe einer Hauptstraße positioniert, auf der die Fahrzeuge 10, 20 fahren. Das Kommunikationsmodul der Datenerfassungseinheiten 130a, 130b entspricht einem LTE-Kommunikationsmodul, mit dem die Fahrzeuge 10, 20 mobile Daten empfangen kann (Downlink) und solche Daten in Aufwärtsrichtung senden kann (Uplink). Sie senden die Daten über den sogenannten Uu-Link an die Basisstation 210. In Bezug auf das LTE-Mobilfunk-Kommunikationssystem besteht das Evolved UMTS Terrestrial Radio Access-Netzwerk E-UTRAN von LTE aus mehreren eNodeBs 210, die die E-UTRA-Benutzerebene (PDCP / RLC / MAC / PHY) und die Steuerebene (RRC) bereitstellen. Die eNodeBs 210 sind mittels der sogenannten X2-Schnittstelle miteinander verbunden. Die eNodeBs sind auch über die sogenannte S1-Schnittstelle mit dem EPC (Evolved Packet Core) 200 verbunden. V2X-Kommunikation wird aber auch durch die 5. Generation von Mobilfunksystemen unterstützt.

Aus dieser allgemeinen Architektur zeigt Fig. 1, dass die Basisstation 210 über die S1-Schnittstelle mit dem EPC 200 verbunden ist und der EPC 200 mit dem Internet 300 verbunden ist. Ein Backend-Server 320, an den die Fahrzeuge 10, 20 Nachrichten senden können und von diesem empfangen können, ist ebenfalls mit dem Internet 300 verbunden. Der Backend-Server 320 kann in einem Rechenzentrum des Fahrzeugherstellers oder eines Systemanbieters für den Fahrzeughersteller oder in einem Rechenzentrum einer Behörde, z.B. einer Verkehrsleitstelle untergebracht sein. Schließlich ist auch eine Straßeninfrastrukturstation 310 gezeigt. Diese kann beispielsweise durch eine straßenseitige Einheit, die im Fachjargon oft als "Road Side Unit" RSU 310 bezeichnet wird, veranschaulicht werden. Die Straßeninfrastrukturstation 310 kann direkt an das Internet 300 angeschlossen werden. Die Kommunikation zwischen Fahrzeug 10, 20 und Straßeninfrastrukturstation 310 kann über das WLAN p-System oder ein anderes lokales Funknetzwerk erfolgen. Zur Vereinfachung der Implementierung wird davon ausgegangen, dass allen Komponenten eine Internetadresse zugewiesen wurde, typischerweise in Form einer IPv6-Adresse, so dass die Pakete, die Nachrichten zwischen den Komponenten transportieren, entsprechend geroutet werden können. Die erwähnten verschiedenen Schnittstellen sind standardisiert. Es wird diesbezüglich auf die entsprechenden Spezifikationen des Mobilfunk-Kommunikationssystems verwiesen, die veröffentlicht sind.

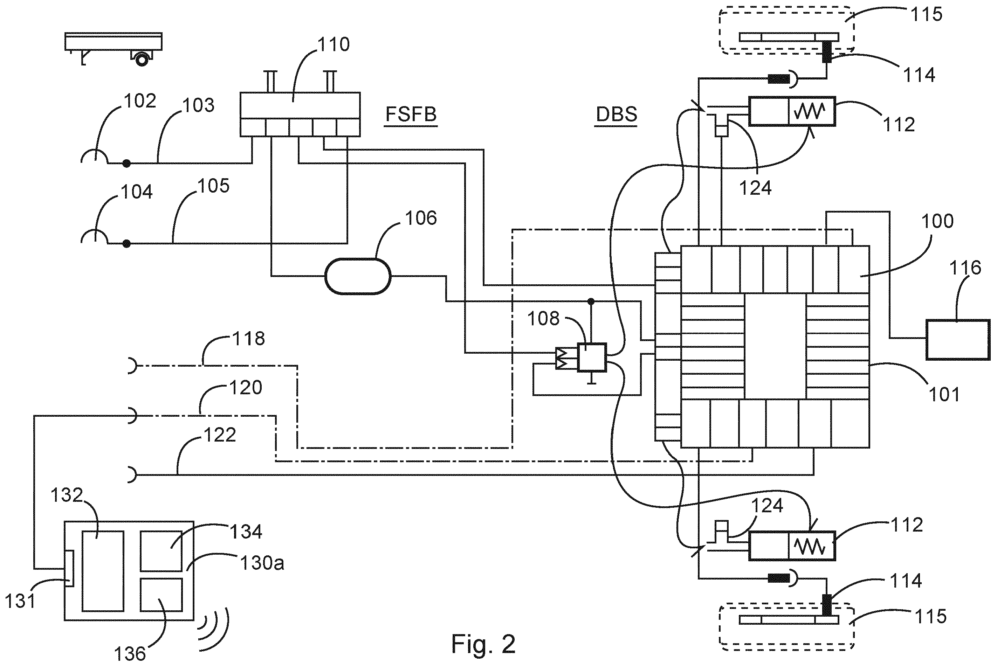

Fig. 2 zeigt schematisch ein Blockschaltbild der Bordelektronik sowie auch der pneumatischen Ausstattung des Anhängerfahrzeuges 20. Wie erwähnt, ist das Anhängerfahrzeug 20 mit einem Druckluftbremssystem DBS ausgestattet. Fig. 2 zeigt den genaueren Aufbau, der Bremsarchitektur, des Anhängers 10. Dargestellt ist ein Auflieger-Anhänger mit nur einer Achse, der auch als SattelAnhänger bezeichnet wird. Dies ist nur ein Beispiel eines mit Druckluftbremse ausgestatten Anhänger-Fahrzeuges 20. Es können aber wie beschrieben, verschiedene andere Anhängertypen mit pneumatischen, mit hydraulischen oder elektrischen Bremsanlagen ausgestattet sein. Die Bezugszahl 100 bezeichnet ein EBS-Steuergerät (Electronic Braking System). Das EBS-Steuergerät 100 ist mit einem Bremsmodulator verbunden, der den Bremsdruck in den Druckluftbremsen an den Rädern 115 moduliert, damit es nicht zu einem Blockieren der Räder 115 bei dem Bremsvorgang kommt. Ein Ausbrechen des Anhängers 10 kann so verhindert werden. Zusätzlich ist an das EBS-Steuergerät 100 eine IMU-Messeinheit 116, entsprechend Inertial Measurement Unit, angeschlossen. Diese beinhaltet eine Anzahl von Beschleunigungssensoren und ggfs. Drehratensensoren zur Erfassung der Bewegung des Anhänger-Fahrzeuges 20 für eine Anzahl von Freiheitsgraden. Damit kann das EBS-Steuergerät 100 auch die ESC-Funktion (Electronic Stability Control) erfüllen. Diese Funktion entspricht einer elektronischen Stabilitätskontrolle. Damit wird durch gezieltes Bremsen einzelner Räder 115 ein Schleudern des Fahrzeugs im Grenzbereich in Kurven sowohl beim Übersteuern als auch beim Untersteuern verhindert.

Mit Bezugszahl 112 sind die schon erwähnten Tristopzylinder bezeichnet, die im Normalbetrieb über ein Gestänge die Bremsbacken der Radbremse betätigen und im abgekoppelten Betrieb die Federspeicher-Feststellbremse FSFB entsprechend des vorgegebenen Bremsdrucks betätigen. An den Rädern 115 sind auch Raddrehzahlsensoren 114 montiert mit denen die Drehbewegung der Räder 115 erfasst wird. Es gibt zwei Druckluftleitungen 102, 104, die mit dem Zugfahrzeug 10 verbunden werden. Die eine Leitung wird als Vorratsleitung bezeichnet und dient zur Druckluftversorgung des Anhängers 10. Der entsprechende Anschluss ist mit der Bezugszahl 102 versehen. Die entsprechende Leitung ist zur besseren Erkennung farblich gestaltet. Sie wird üblicherweise in roter Farbe gestaltet. Diese Vorratsleitung ist an das Park-Löse-Sicherheitsventil 110 geführt und führt von dort auch an den Druckluftvorratsbehälter 106 des Anhängers 10. Von dort führt die Vorratsleitung weiter an den Modulator des EBS-Steuergerätes 100 und weiter an ein Überlastschutzventil 108. Die zweite Druckluftleitung wird als Bremsleitung bezeichnet und dient zur Vermittlung des Bremsdrucks, wie vom Fahrer des Zugfahrzeuges 11 durch Treten des Bremspedals vorgegeben. Der entsprechende Anschluss der Bremsdruckleitung am Anhänger 10 ist mit der Bezugszahl 104 bezeichnet. Auch diese Leitung führt über das Park-Löse-Sicherheitsventil 110 zu dem Überlastschutzventil 108 und von dort zu den Tristopzylindern 112 und zu dem Modulator des ESP-Steuergerätes 100.

Daneben gibt es elektrische Verbindungen zwischen dem Anhängerfahrzeug 20 und dem Zugfahrzeug 10. Mit der Bezugszahl 118 ist eine Diagnoseleitung bezeichnet. Darüber kann ein Diagnosegerät angeschlossen werden, mit dem der Fehlerspeicher des EBS-Steuergerätes 100 ausgelesen werden kann. Mit der Bezugszahl 120 ist eine CAN-Busleitung bezeichnet. Darüber werden Steuerbefehle von dem Zugfahrzeug 10 an das EBS-Steuergerät 100 übertragen. Schließlich ist mit der Bezugszahl 122 eine Stromversorgungsleitung bezeichnet. Die Anhängerfahrzeuge 20 sind typischerweise nicht mit eigener Stromversorgung ausgestattet.

Das Druckluftbremssystem DBS des Anhängerfahrzeuges 20 besteht aus den Komponenten EBS-Steuergerät 100, dem Anschluss 102 für die Druckluftvorratsleitung, der Druckluftvorratsleitung 103, dem Anschluss 104 für die Bremsdruckleitung, der Bremsdruckleitung 105, dem Druckluftvorratsbehälter 106, dem Überlastschutzventil 108, dem Park-Löse-Sicherheitsventil 110, dem Tristopzylinder 112, und dem Drehzahlsensor 114.

Die Federspeicher-Feststellbremse FSFB besteht aus den Komponenten dem Anschluss 102 für die Druckluftvorratsleitung, der Druckluftvorratsleitung 103, dem Druckluftvorratsbehälter 106, dem Überlastschutzventil 108, dem Park-Löse-Sicherheitsventil 110, und dem Tristopzylinder 112. Über den Tristopzylinder 112 wird im Normalbetrieb die Betriebsbremse betätigt. Der Bremsdruck mit dem der Tristopbremszylinder 112 beaufschlagt wird, wird über den Drucksensor 124 gemessen. Die erste Datenerfassungsvorrichtung des Anhängerfahrzeuges (20) ist mit der Bezugszahl 130a versehen. Sie wird an den Kommunikationsbus 120, z.B. CAN-Bus angeschlossen. Die erste Datenerfassungsvorrichtung 130a zeichnet die Zeitreihen, der von den Drucksensoren 124 gemessenen Druckwerte auf. Dafür werden diese Messwerte zusammen mit den erfassten Messzeitpunkten über den CAN-Bus 120 zu der ersten Datenerfassungsvorrichtung 130a übertragen. Genauso werden die von den Raddrehzahlsensoren 114 gemessenen Raddrehzahlwerte zusammen mit den Messzeitpunkten an die Datenerfassungsvorrichtung 130a übertragen. Fig. 2 zeigt auch ein grobes Blockschaltbild der ersten Datenerfassungsvorrichtung 130a. Mit Bezugszahl 132 ist eine Speichereinheit bezeichnet. Es kann eine nichtflüchtige Speichereinheit in Form einer SD-Speicherkarte, eines USB-Sticks, einer SSD-Festplatte, oder einer HDD-Festplatte, usw. sein. Auch eine CMOS-RAM-Speichereinheit kommt dafür in Frage.

Der Datenaustausch zwischen Zugfahrzeug 10 und Anhängerfahrzeug 20 ist im CAN-Bus Standard spezifiziert. Für genaue Details zu dem Übertragungsprotokoll wird auf die Spezifikation ISO 11992-2 (Highspeed-CAN) verwiesen. Über diesen Bus werden kontinuierlich Daten ausgetauscht. Im betrachteten Beispiel sendet das Zugfahrzeug 10 CAN-Botschaften in der Art "Bremsanforderung inaktiv" und "Bremsanforderung aktiv, die Verzögerungsanforderung liegt bei dem Wert XY". Für die Kommunikation der Steuergeräte untereinander im Zugfahrzeug 10 über den CAN-Bus sind die Botschaftsformate im SAE J1939 Standard spezifiziert. Es halten sich aber nicht alle Fahrzeughersteller daran, sondern es werden oft auch proprietäre Botschaftsformate von den Fahrzeug-Herstellern spezifiziert. Ein Bremssystem-Hersteller für Anhänger-Fahrzeuge muss sich zusätzlich auch an die in dem Standard ISO 11992 spezifizierten Botschaftsformate halten, woran aber auch der Zugfahrzeughersteller gebunden ist.

Bei Testfahrten soll jetzt das Bremsverhalten Anhängerfahrzeuges 20 getestet werden. Dafür werden Messwerte in der ersten Datenerfassungseinheit 130a aufgezeichnet, die im Anhängerfahrzeug 20 an den CAN-Bus 120 angeschlossen wird. Derartige erste und/oder zweite Datenerfassungseinheiten 130a, 130b gibt es fertig zu kaufen. Sie werden von verschiedenen Anbietern oft als Datenlogger oder auch als Telematikeinheit bezeichnet. Die erste Datenerfassungseinheit 130a empfängt die Botschaften, die auf dem CAN-Bus 120 übertragen werden. Wie im Beispiel von Fig. 2, kann es sein, dass die Sensoren 114, 124 nicht direkt an den CAN-Bus 120 angeschlossen sind. Trotzdem überträgt das EBS-Steuergerät 100 deren Messwerte über den CAN-Bus 120 an das Zugfahrzeug 10, so dass sie von der ersten Datenerfassungseinheit 130a erfasst werden können.

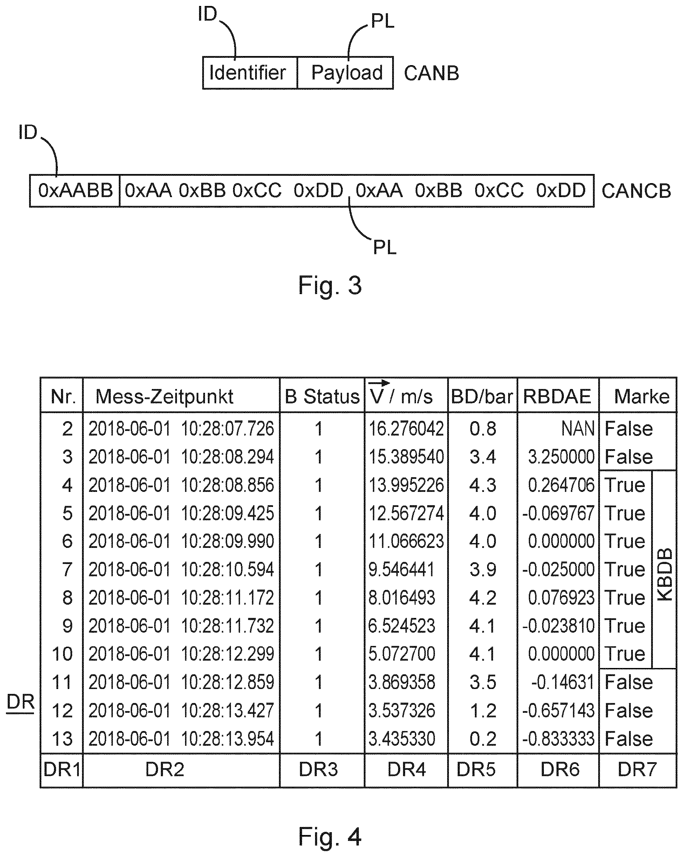

Solche CAN-Bus Botschaften haben ein grobes Nachrichtenformat, wie in Fig. 3 gezeigt. Es ist zweigeteilt, wobei im ersten Teil ein Botschafts-Identifizierer ID übertragen wird und im zweiten Teil die Nutzdaten. Der Botschafts-Identifizierer ID kennzeichnet den Inhalt der mit der Botschaft übertragenen Daten und entscheidet bei der Busarbitrierung über die Priorität der Botschaft. Es wird beim CAN-Bus ein Buszugriffsverfahren nach dem CSMA/CR Verfahren eingesetzt, entsprechend "Carrier Sense Multiple Access/Collision Resolution". Dem Bremssystem-Hersteller sind die Botschaften, mit denen die Sensordaten übertragen werden bekannt. Somit ist eine grundlegende Zuordnung zum Nachrichteninhalt möglich. Dies wird bei der ersten Datenerfassungseinheit 130a ausgenutzt. Die Botschaften mit den interessierenden Daten können anhand des Botschaftsidentifizierers ausgefiltert werden. Im Nachrichtenteil der Botschaft sind dann die genauen Parameterwerte enthalten. Diese Daten können in der ersten Datenerfassungseinheit 130a abgespeichert werden. Die Zeitinformation über den Messzeitpunkt wird typischerweise nicht über den CAN-Bus 120 übertragen. Deshalb ist es erforderlich, dass die erste Datenerfassungseinheit 130a die Zeitpunkte des Eintreffens der jeweiligen Botschaften in der Datenreihe mitnotiert von einer eigenen Uhr und/oder mit einem Zeitstempel kennzeichnet.

Ein Problem besteht allerdings darin, dass den Herstellern der Datenerfassungseinheiten 130a, 130b nicht die Identifizierer ID und auch nicht die Vorschriften und/oder Rechenregeln zur Nachrichteninterpretation bekannt sind, die sich von Hersteller zu Hersteller unterscheiden können. Somit ist eine feste Programmierung der Datenerfassungseinheiten 130a, 130b für den Hersteller der Datenerfassungseinheiten 130a, 130b nicht einfach möglich.

Deshalb wird erfindungsgemäß eine programmierbare Datenerfassungseinheit 130a, 130b vorgeschlagen. Wie erwähnt, können die erste und zweite Datenerfassungseinheit unabhängig voneinander betrieben werden und identisch aufgebaut sein. Im Folgenden wird erläutert, wie die erste und zweite Datenerfassungseinheit 130a und 130b konfiguriert werden kann. Es wird beispielhaft nur von der ersten Datenerfassungseinheit 130a gesprochen. Dazu wird an die Datenerfassungseinheit 130a eine Konfigurationsbotschaft CANCB übertragen. Das kann bevorzugt über die Luftschnittstelle, also das Kommunikationsmodul 134 erfolgen. Die Konfigurationsbotschaft CANCB würde dann von den Experten, die auch an den Testergebnissen interessiert sind, und z.B. dort lokalisiert sind, wo sich der Backend-Server 320 befindet, erzeugt werden und ebenfalls über Mobilfunk oder WLAN p zu dem Anhängerfahrzeug 20 übertragen. Als Beispiel könnte eine Konfigurationsbotschaft im JSON-Format oder XML-Format an das Anhängerfahrzeug 20 übertragen werden. In dieser Botschaft wären im Nutzdatenteil die gewünschten Botschaftsidentifizierer (ID) enthalten, die erfasst werden sollen, wie auch die Vorschriften zur Interpretation der Nutzdaten in der gewünschten CAN Botschaft CANB für die Vorabanalyse als auch die Regel, wann die Daten gesammelt werden sollen. Dies kann entweder zeitbasiert oder ereignisbasiert erfolgen. Die Konfigurationsbotschaft CANCB bestimmt also mit welchen Daten die Datenreihe (DR) aufgestellt wird.

Eine Vorschrift zur Interpretation der Nuzdaten könnte z.B. lauten: "nehme das erste Zeichen von Nachrichten mit Identifier XY, multipliziere es mit einem Skalierungsfaktor, füge einen Offset hinzu und interpretiere es als Ganzzahl". Zur Interpretation der Nutzdaten in der empfangenen Botschaft würde diese Vorschrift beachtet und die entsprechenden Messwerte in die Datenreihe eingetragen. Ein anderes Beispiel für Interpretationsvorschriften auf Bit-Ebene ist: "Für Nachrichten mit ID=0xAABB nehme Byte 1 und werte Bit 2 aus".

Auf Byte-Ebene: "Für Nachrichten mit ID=0xAABB ermittle den Wert der Bytes 1 und 2, konvertiere ihn mit einem Skalierungsfaktor und addiere einen Offset, um den physikalischen Wert zur Interpretation zu erhalten." Dies entspricht einer Vorschrift, wie Integer-Zahlen in Gleitkomma-Zahlen umgewandelt werden können. Weiterhin kann die Wertigkeit der Bits/Bytes angegeben werden. Es kommen hier die beiden Möglichkeiten der Sortierung von rechts nach links ("Little Endian") entsprechend niedrigstes wertiges Byte zuerst und Sortierung von links nach rechts ("Big Endian") entsprechend höchst wertiges Byte zuerst in Frage. Auch die Art der Zahlendarstellung z.B., Integer-Zahl oder Gleitkomma-Zahl kann Teil der Vorschrift sein.

Fig. 4 zeigt ein konkretes Zahlenbeispiel einer Messreihe für den Betriebsdruck, gemessen von dem Drucksensor 124. Es sind zwölf Messwerte aufgelistet. Die erste Spalte enthält die laufende Nummer DR1 der Messwerte. In der zweiten Spalte ist das Datum und der Messzeitpunkt DR2 des jeweiligen Messwertes angegeben. In der dritten Spalte wird ein Bremsenstatus DR3 angegeben. Die Zahl 1 bedeutet, dass die Betriebsbremse im Normalbetrieb arbeitete. Die vierte Spalte enthält die jeweils zum gleichen Zeitpunkt gemessene Umfanggeschwindigkeit DR4 eines Rades, gemessen in der Einheit m/s. In der fünften Spalte wird der Bremsdruck DR5 gemessen in Bar aufgelistet. In der sechsten Spalte wird die relative Bremsdruckänderung DR6 im Vergleich zum Vorgänger-Messwert aufgelistet. Diese Angabe ist dimensionslos und errechnet sich nach einer Rechenvorschrift, die nachfolgend noch genauer erläutert wird. Schließlich ist in der letzten Spalte eine Marke DR7 aufgelistet, die an die Werte in der fünften Spalte geknüpft ist und angibt, ob die Messwertänderung unterhalb eines Minimalwertes liegt. Diese Angabe dient zur schnelleren Auffindung des interessierenden Bereiches konstanten Bremsdrucks DR5.

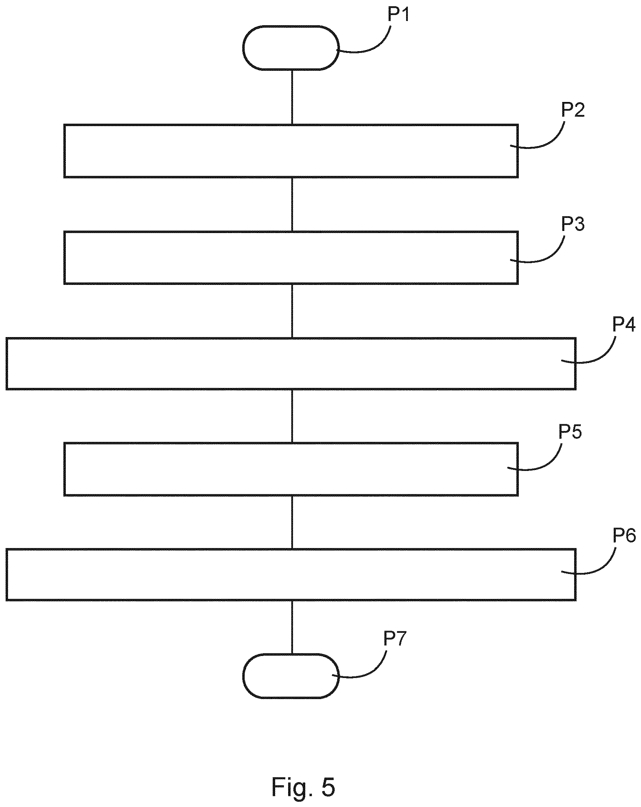

Die in der sechsten und letzten Spalte enthaltenen Zahlen der Tabelle werden durch eine Vorabanalyse der Messwerte in der vierten und fünften Spalte berechnet. Dazu wird ein Computerprogramm eingesetzt, das in der Recheneinheit 134 der ersten Datenerfassungsvorrichtung 130a berechnet wird und dessen Ablaufdiagramm in Fig. 5 gezeigt ist. Das Computerprogramm der Fig.5 kann nach Ende der Testfahrt durchlaufen werden oder auch schon während der Testfahrt im Hintergrund durchgeführt werden. Der Programmstart ist mit Bezugszeichen P1 und der Angabe "Start" bezeichnet. Im Programmschritt P2 mit der Angabe "Berechne rel. Änderung der Messwerte", wird die relative Änderung der aufgezeichneten Messwerte für den Bremsdruck berechnet. Die sich ergebenden Werte sind in Spalte RBDAE der Tabelle von Fig. 3 aufgelistet. Es wird im Programmschritt P2 die relative Änderung des Druckwerts zum Vorgängerwert bestimmt und in die Spalte RBDAE eingetragen. Die Rechenvorschrift besteht darin, dass das Verhältnis zwischen Nachfolgerwert zu Vorgängerwert gebildet wird und von dem Ergebnis der Wert 1 abgezogen wird. Die relative Änderung zwischen den Werten in Zeile 3 und 4 von Spalte fünf würde wie folgt berechnet: 4,3/3,4 -1 = 0,2647. So ergeben sich die Zahlenwerte in Spalte RBDAE. Im nächsten Programmschritt P3 mit der Angabe "Def. Marke := "True" für rel. Änd. <= RFW" werden die Werte bzgl. der relativen Änderung analysiert und es wird ein Eintrag in der Spalte "Marke" der Tabelle in Fig. 3 gesetzt. Der Eintrag gibt darüber Aufschluss, ob die relative Änderung relativ gering ist. Falls ja, wird als Marke der Eintrag "True" eingetragen. Falls die relative Änderung gegenüber dem Vorgängerwert größer ist, wird als Marke "False" eingetragen. Durch diese Maßnahme kann anschließend der interessierende Bereich relativ konstanten Bremsdrucks schneller aufgefunden werden. Als Beispiel wird als Grenzwert für die maximal erlaubte relative Änderung ein Wert von +/-10% angesetzt. Wird dieser Grenzwert auf die Werte in Spalte RBDAE in der Tabelle von Fig. 3 eingesetzt, so wird der Eintrag "True" zuerst in Zeile 4 gesetzt und zuletzt in Zeile 10. Im Programmschritt P4 mit der Angabe "Zähle Anz. der "True" Einträge pro Bereich mit RDZ ≠ 0" erfolgt nun eine Vorabanalyse der aufgezeichneten Datenreihe DR. Dies kann ganz einfach durchgeführt werden, indem die Einträge in der Spalte Marke betrachtet werden. Es wird die Anzahl der "True"-Einträge pro "True"-Bereich gezählt, wo die gemessene Umfangsgeschwindigkeit ungleich Null ist. Es kann mehrere solcher Bereiche in der aufgezeichneten Datenreihe geben. Die Versuchsingenieure sind an dem längsten, konstanten Druckverlauf während eines Bremsvorgangs und an der Verzögerung des Fahrzeugs in diesem Bereich interessiert. Dieser Bereich entspricht dem Bereich mit der maximalen Anzahl von "True"-Einträgen in der Tabelle, wo die Umfangsgeschwindigkeit ungleich Null ist. Die Daten für den im Schritt P4 bestimmten Bereich werden im Programmschritt P5 mit der Angabe "Wähle den Maximum-Bereich" ausgewählt und als Nutzdatenpaket für die Übertragung an den Backend-Server 320 zusammengestellt. Im Programmschritt P6 mit der Angabe "Übertrage den selektierten Maximum-Bereich an Backend", wird das vorbereitete Nutzdatenpaket an das Kommunikationsmodul 136 weitergeleitet. In dem Kommunikationsmodul 136 wird das Nutzdatenpaket mit den nötigen Protokolldaten wie Fehlerschutz und Adressinformationen, etc. ergänzt und anschließend zu dem Backend-Server übertragen. Das Programm endet nach Weiterleitung des Nutzdatenpaketes an das Kommunikationsmodul 136 im Programmschritt P7 mit der Angabe "Ende".

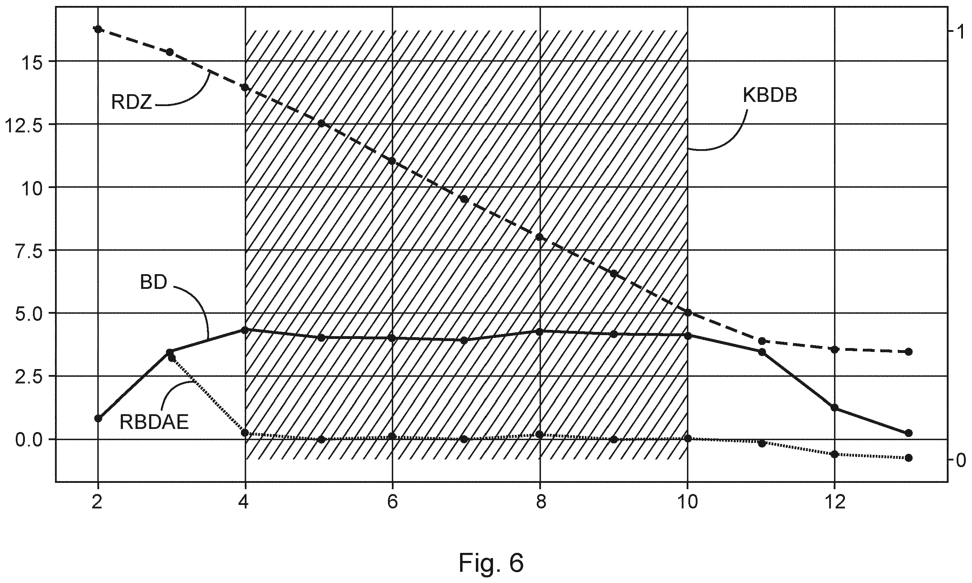

Fig. 6 zeigt die Messwertreihe in der Tabelle von Fig. 3 in graphischer Darstellung. Mit dem Bezugszeichen BD ist die Kurve für den gemessenen Bremsdruck DR5 bezeichnet. Mit dem Bezugszeichen RBDAE ist die berechnete relative Änderung DR6 des Bremsdruckes DR5 bezeichnet. Mit dem Bezugszeichen RDZ ist die Umfangsgeschwindigkeit des gemessenen Rades 115 bezeichnet. Schließlich bezeichnet KBDB den interessierenden Bereich relativ konstanten Bremsdruck DR5 für die lineare Verzögerung, wobei die relative Änderung DR6 des Bremsdrucks +/-10% des vorhergehend gemessenen Bremsdruckwertes DR5 entspricht. Die Messwerte in diesem Bereich sind mit dem Eintrag "True" markiert. Im Beispiel von Fig. 6 ist die Auswahl des zu extrahierenden Bereichs besonders einfach, weil es insgesamt nur einen Bereich mit gesetzten "True"-Einträgen gibt.

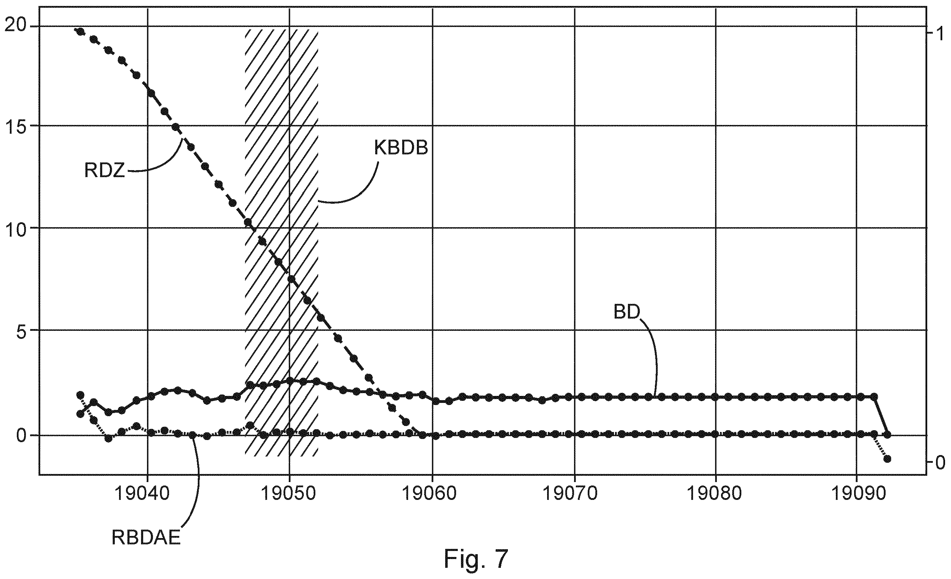

Fig. 7 zeigt die graphische Darstellung einer Datenreihe DR in der es mehrere Bereiche mit konstantem Bremsdruck DR5 gibt. In diesem Fall wird der am längsten dauernde Bereich bei sich bewegendem Fahrzeug 20 ausgewählt. Der Stillstand-Bereich könnte einen Bereich umfassen, bei dem die Räder 115 während des Bremsvorgangs blockieren, so dass für eine andere Zielstellung auch dieser Bereich interessieren könnte. Gerade bei der Fig. 7 ist deutlich zu erkennen, dass der Bereich KBDB im Vergleich zur gesamten Datenreihe DR nur noch ca. 10% des Datenumfangs entspricht. Der Vorteil dieser Art der Vorverarbeitung besteht darin, dass wesentlich weniger Daten zum Backend-Server 320 übertragen werden müssen und im Backend wesentlich weniger Daten gespeichert und ausgewertet werden müssen. Bei realen Testfahrten könnte der Vorteil noch größer ausfallen, weil z.B. nur noch 1% der Daten übertragen werden müssen.

Alle hierin erwähnten Beispiele wie auch bedingte Formulierungen sind ohne Einschränkung auf solche speziell angeführten Beispiele zu verstehen. So wird es zum Beispiel von Fachleuten anerkannt, dass das hier dargestellte Blockdiagramm eine konzeptionelle Ansicht einer beispielhaften Schaltungsanordnung darstellt. In ähnlicher Weise ist zu erkennen, dass ein dargestelltes Flussdiagramm, Zustandsübergangsdiagramm, Pseudocode und dergleichen verschiedene Varianten zur Darstellung von Prozessen darstellen, die im Wesentlichen in computerlesbaren Medien gespeichert und somit von einem Computer oder Prozessor ausgeführt werden können. Das in den Patentansprüchen genannte Objekt kann ausdrücklich auch eine Person sein.

Es sollte verstanden werden, dass das vorgeschlagene Verfahren und die zugehörigen Vorrichtungen in verschiedenen Formen von Hardware, Software, Firmware, Spezialprozessoren oder einer Kombination davon implementiert werden können. Spezialprozessoren können anwendungsspezifische integrierte Schaltungen (ASICs), Reduced Instruction Set Computer (RISC) und / oder Field Programmable Gate Arrays (FPGAs) umfassen. Vorzugsweise wird das vorgeschlagene Verfahren und die Vorrichtung als eine Kombination von Hardware und Software implementiert. Die Software wird vorzugsweise als ein Anwendungsprogramm auf einer Programmspeichervorrichtung installiert. Typischerweise handelt es sich um eine Maschine auf Basis einer Computerplattform, die Hardware aufweist, wie beispielsweise eine oder mehrere Zentraleinheiten (CPU), einen Direktzugriffsspeicher (RAM) und eine oder mehrere Eingabe/Ausgabe (I/O) Schnittstelle(n). Auf der Computerplattform wird typischerweise außerdem ein Betriebssystem installiert. Die verschiedenen Prozesse und Funktionen, die hier beschrieben wurden, können Teil des Anwendungsprogramms sein oder ein Teil, der über das Betriebssystem ausgeführt wird.

Die Offenbarung ist nicht auf die hier beschriebenen Ausführungsbeispiele beschränkt. Es gibt Raum für verschiedene Anpassungen und Modifikationen, die der Fachmann aufgrund seines Fachwissens als auch zu der Offenbarung zugehörend in Betracht ziehen würde.

Hinter der hier vorgestellten Aggregationsfunktion steckt die Annahme, dass sich eine Datenreihe auf einen charakteristischen Bereich reduzieren lässt und doch eine technische Beurteilung zum Systemzustand möglich ist, hier: Druckverlauf und Verzögerung. Das vorgestellte Prinzip zur Datenaggregation lässt sich jedoch generalisieren und auf verschiedene Arten von anderen Anwendungen und Datenreihen übertragen.

Als weitere Beispiele von Steuergeräten in Fahrzeugen die ebenfalls mit dem erfindungsgemäßen Datenerfassungsgerät getestet oder überwacht werden können werden genannt: Airbagsteuergerät, Motorsteuergerät, Getriebesteuergerät, Fahrwerkssteuergerät, sowie verschiedene Steuergeräte für Assistenzsysteme: Notbremsassistent, ESC (Electronic Stability Control), Spurhalte- oder Spurwechselassistent, Abbiegeassistent, Abstandsregelassistent, Abstandswarnassistent, Einparkassistent, usw. Auch die dafür erforderlichen Umfelderfassungssensoren (Lidar, Radar, Ultraschall, sowie verschiedene Typen von Kameras) können damit ebenfalls dynamisch ausgewertet werden. Gerade bei diesen Sensoren ist es vorteilhaft die ausgegebenen Daten zu filtern, weil hier die Datenmengen noch viel größer sind als bei den verschiedenen Steuergeräten. Die Datenaggregation kann bei den Umfelderfassungssensoren z.B. darauf beruhen, dass für die dynamische Nachrichteninterpretation von einer extern installierten Road Side Unit 310 eine Nachricht zum Datenerfassungssystem gesendet wird mit dem Befehl ab wann die von der Kamera aufgenommenen Bilder an den Backend-Server 320 gesendet werden sollen. Diese Nachricht könnte von der Road Side Unit 310 gesendet werden, wenn das Testfahrzeug einen bestimmten Abstand zum Verkehrsschild aufweist.

Die erfindungsgemäße Datenerfassungseinheit lässt sich insbesondere für Testfahrten bei der Entwicklung von Fahrzeugsystemen einsetzen. Es ist aber auch möglich, dass solche Datenerfassungseinheiten in Serienfahrzeugen eingesetzt werden, um den Daten-Busverkehr innerhalb des Fahrzeuges zu überwachen und Manipulationen oder Fehlerzustände zu entdecken.

Man könnte z.B. automatisiert Bilder von Tankstellenpreisen erfassen bei einer Anwendung außerhalb von Teststrecken. Dafür müsste allerdings das Navigationssystem den entsprechenden Befehl senden, ab wann die Daten zum Backend-Server 320 übertragen werden sollen. Ein anderes Beispiel betrifft das Fuhrparkcontrolling z.B. bei Logistikunternehmen. Mit der dynamischen Nachrichteninterpretation könnten sich die Controller dann selbst Datenpakete definieren die für die Rechenschaftslegung wichtig sind. Beispielsweise könnte eine Nachricht lauten: "Wie oft hat der Spurhalteassistent eingegriffen, um den ungewollten Spurwechsel zu verhindern?" Diese Daten könnten von Zeit zu Zeit an den Backend-Server 320 übertragen werden.

### Bezugszeichenliste (Teil der Beschreibung)

- 10: Zugfahrzeug
- 20: Anhängerfahrzeug
- 100: Bremssteuergerät
- 102: Anschluss Druckluftvorratsleitung
- 103: Druckluftvorratsleitung
- 104: Anschluss Bremsdruckleitung
- 105: Bremsdruckleitung
- 106: Druckluftvorratsbehälter
- 108: Überlastschutzventil
- 110: Park-Löse-Sicherheitsventil
- 112: Tristop-Bremszylinder
- 114: Raddrehzahlsensor
- 115: Rad
- 116: IMU-Einheit
- 118: Diagnoseleitung
- 120: Kommunikationsbus
- 122: Stromversorgungsleitung
- 124: Drucksensor
- 130a: erste Datenerfassungsvorrichtung
- 130b: zweite Datenerfassungsvorrichtung
- 131: CAN-Bus-Schnittstelle
- 132: Speichereinheit
- 134: Recheneinheit
- 136: Kommunikationsmodul
- 200: Evolved Packet Core
- 210: Mobilfunk-Basisstation
- 300: Internet
- 310: Road-Side Unit
- 320: Backend-Server
- BD: Bremsdruckverlauf
- CANB: CAN Botschaft
- CANCB: Konfigurationsbotschaft
- DBS: Druckluftbremssystem bestehend aus Komponenten 100 - 114
- DR1: laufende Nummer
- DR2: Messzeitpunkt
- DR3: Bremsenstatus
- DR4: Umfanggeschwindigkeit
- DR5: Bremsdruck
- DR6: relative Bremsdruckänderung
- DR7: Marke
- FSFB: Federspeicher-Feststellbremse bestehend aus den Komponenten 102, 103, 106, 108, 110, 112
- ID: Botschafts-Identifizierer
- KBDB: Bereich konstanten Bremsdrucks
- PL: Nutzdaten
- RBDAE: Verlauf der relativen Bremsdruckänderung
- RDZ: Verlauf der Raddrehzahl
- RFW: Referenzwert
- P1 - P7: verschiedene Programmschritte eines Computerprogramms

## Patentansprüche

1. Datenerfassungsvorrichtung (130a, 130b) für mobile Vorrichtungen (10,20), mit einer Recheneinheit (134) und einer Speichereinheit (132), weiterhin aufweisend ein Kommunikationsmodul (136) zum Senden erfasster Daten (DR4, DR5) an einen Backend-Server (320), sowie eine Busschnittstelle (131) zum Empfang von Botschaften (CANB), die über einen internen Kommunikationsbus (120) der mobilen Vorrichtung (10, 20) übertragen werden, wobei die Recheneinheit (134) eingerichtet ist, mit den in den Botschaften (CANB) empfangenen Daten (DR4, DR5) eine Datenreihe (DR) zu bilden wobei die Recheneinheit (134) eingerichtet ist die Datenreihe in der Speichereinheit (132) abzuspeichern, wobei die Recheneinheit (134) ausgelegt ist eine Vorabanalyse der abgespeicherten Datenreihe (DR) in Form einer Datenaggregation (P1 - P7) durchzuführen bei der wenigstens ein interessierender Bereich (KBDB) der Datenreihe (DR) extrahiert und an das Kommunikationsmodul (136) weitergeleitet wird, wobei das Kommunikationsmodul (136) eingerichtet ist den wenigstens einen extrahierten Bereich (KBDB) der Datenreihe (DR) an den Backend-Server (320) zu übertragen, **dadurch gekennzeichnet, dass**
die Datenaggregation (P1-P7) zur Extraktion des interessierenden Bereiches einen Schritt (P2) der Berechnung der relativen Änderung (DR6) eines Datums (DR5) in der Datenreihe (DR) gegenüber dem vorhergehenden Datum in der Datenreihe beinhaltet und einen Schritt (P3) der Zuordnung einer Markierung (DR7) zu einem Datum (DR5) in der Datenreihe (DR) beinhaltet, wobei die Markierung (DR7) dem jeweiligen n-ten Datum (DR5) zugeordnet wird, wenn die relative Änderung (DR6) des n-ten Datums (DR5) in der Datenreihe (DR) gegenüber dem n-1-ten Datum (DR5) in der Datenreihe (DR), mit n Element einer natürlichen Zahl, kleiner als ein minimal zulässiger Referenzwert (RFW) ist, wobei die Datenaggregation (P1 - P7) einen Schritt (P4) der Zählung der unmittelbar aufeinanderfolgenden markierten Daten (DR4, DR5) in der Datenreihe (DR) beinhaltet, bei denen gleichzeitig die mobile Vorrichtung (10, 20) noch in Bewegung ist, wobei die Datenaggregation (P1 - P7) einen Schritt der Bestimmung des Bereiches (KBDB) in der Datenreihe (DR) beinhaltet, in dem eine maximale Anzahl unmittelbar aufeinanderfolgender Daten (DR4, DR5) mit der gesetzten Markierung (DR7) enthalten ist, wobei das Kommunikationsmodul (136) ausgelegt ist den Bereich (KBDB) der Datenreihe (DR) mit der maximalen Anzahl der unmittelbar aufeinanderfolgenden Daten (DR4, DR5) mit der gesetzten Markierung (DR7) an den Backend-Server (320) zu senden.

2. Datenerfassungsvorrichtung (130a, 130b) nach Anspruch 1, wobei die Recheneinheit (134) ausgelegt ist die Zeitpunkte (DR2) des Empfangs der empfangenen Botschaften (CANB) jeweils in der Datenreihe (DR) bei den Daten (DR4, DR5) der jeweils empfangenen Botschaft (CANB) mitzunotieren.

3. Datenerfassungsvorrichtung (130a, 130b) nach Anspruch 1 oder 2, wobei das Kommunikationsmodul (136) eingerichtet ist wenigstens eine Konfigurationsnachricht (CANCB) zu empfangen, wobei die wenigstens eine Konfigurationsnachricht (CANCB) eine Vorschrift beinhaltet wie die Daten (DR4, DR5) einer über den internen Kommunikationsbus (120) übertragenen Botschaft (CANB) ausgewertet sollen

4. Datenerfassungsvorrichtung (130a,130b) nach Anspruch 3, wobei die Recheneinheit (134) ausgelegt ist die Datenreihe (DR) mit den Daten (DR4, DR5) der empfangenen Botschaften (CANB) entsprechend der Vorschrift aus der wenigstens einen Konfigurationsnachricht (CANCB) aufzustellen.

5. Datenerfassungsvorrichtung (130a, 130b) nach einem der vorhergehenden Ansprüche, wobei die erfassten Daten (DR4, DR5) von Sensoren (114, 124) gemessene Daten (DR4, DR5) oder von Recheneinheiten (100) berechnete Daten (DR6) betreffen.

6. Datenerfassungsvorrichtung (130a, 130b) nach einem der vorhergehenden Ansprüche, wobei die mobile Vorrichtung ein Fahrzeug (10, 20) ist und der interne Kommunikationsbus (120) als ein CAN-Bus des Fahrzeuges (10, 20) ausgebildet ist, entsprechend Controller Area Network.

7. Datenerfassungsvorrichtung (130a,) nach Anspruch 6, wobei das Fahrzeug einem Zugfahrzeug (10) oder einem Anhängerfahrzeug (20) entspricht und das Anhängerfahrzeug (20) mit einem Bremssystem (DBS) ausgestattet ist.

8. Datenerfassungsvorrichtung (130a) nach Anspruch 7, wobei an den internen CAN-Bus (120) des Anhängerfahrzeuges (20) ein Bremssteuergerät (100) angeschlossen ist, dass die Daten (DR4, DR5) von einer Anzahl von an das Bremssteuergerät (100) angeschlossenen Bremsdrucksensoren (124) und/oder Raddrehzahlsensoren (114) über den CAN-Bus überträgt.

9. Datenerfassungsvorrichtung (130a) nach Anspruch 8, wobei die Vorschrift in der wenigstens einen Konfigurationsnachricht (CANCB) wenigstens den Botschafts-Identifizierer (ID) der CAN-Botschaft (CANB) beinhaltet, mit der der gemessene Bremsdruck (DR5) eines Bremsdrucksensors (124) übertragen wird und/oder eine Angabe über die minimale relative Bremsdruckänderung (DR6), die gegenüber dem unmittelbar vorhergehenden Bremsdruckwert (DR5) in der Datenreihe (DR) noch tolerierbar ist, um den Bremsdruckwert (DR5) noch einem Bereich (KBDB) relativ konstanten Bremsdrucks (DR5) zuordnen zu können.

10. Datenerfassungsvorrichtung (130a) nach Anspruch 8 oder 9, wobei die Vorschrift in der wenigstens einen Konfigurationsnachricht (CANCB) wenigstens den Botschafts-Identifizierer (ID) der CAN-Botschaft (CANB) beinhaltet, mit der eine Information (DR4) eines Raddrehzahlsensors (124) übertragen wird.

11. Verfahren zur Durchführung einer Vorabanalyse bei einer Datenerfassungsvorrichtung (130a) nach einem der vorhergehenden Ansprüche, wobei aus Daten in Botschaften (CANB), die über einen internen Kommunikationsbus einer mobilen Vorrichtung übertragen werden, eine Datenreihe (DR) gebildet wird, wobei die Vorabanalyse die Funktion einer Datenaggregation (P1 -P7) erfüllt, **dadurch gekennzeichnet, dass**
die Datenaggregation (P1-P7) einen Schritt (P2) der Berechnung der relativen Änderung (DR6) der Daten (DR5) in der Datenreihe (DR) und einen Schritt (P3) der Zuordnung einer Markierung (DR7) zu einem Datum (DR5) in der Datenreihe (DR) beinhaltet, wobei die Markierung (DR7) dem jeweiligen Datum (DR5) zugeordnet wird, wenn die relative Änderung (DR6) des n-ten Datums (DR5) in der Datenreihe (DR) gegenüber dem n-1-ten Datum (DR5) in der Datenreihe (DR), mit n Element einer natürlichen Zahl, kleiner als ein minimal zulässiger Referenzwert (RFW) ist, wobei die Datenaggregation (P1 - P7) einen Schritt (P4) der Zählung der unmittelbar aufeinanderfolgenden markierten Daten (DR4, DR5) in der Datenreihe (DR) beinhaltet, bei denen gleichzeitig die mobile Vorrichtung (10, 20) noch in Bewegung ist, wobei die Datenaggregation (P1 - P7) einen Schritt der Bestimmung des Bereiches (KBDB) in der Datenreihe (DR) beinhaltet, in dem die maximale Anzahl unmittelbar aufeinanderfolgender Daten (DR4, DR5) mit der gesetzten Markierung (DR7) enthalten ist, wobei der Bereich (KBDB) der Datenreihe (DR) mit der maximalen Anzahl der unmittelbar aufeinanderfolgenden Daten (DR4, DR5) mit der gesetzten Markierung (DR7) an einen Backend-Server (320) gesendet wird.

12. Fahrzeug, **dadurch gekennzeichnet, dass** das Fahrzeug (10, 20) mit einer Vorrichtung (130a) nach einem der Ansprüche 1 bis 10, insbesondere zur Durchführung eines Verfahrens nach Anspruch 11, ausgestattet ist, wobei das Fahrzeug der mobilen Vorrichtung entspricht.

13. Computerprogramm, **dadurch gekennzeichnet, dass** das Computerprogramm ausgelegt ist, bei Abarbeitung in einer Recheneinheit (134) die Schritte des Verfahrens nach Anspruch 11 durchzuführen.

## Claims

1. Data acquisition device (130a, 130b) for mobile devices (10, 20), comprising a computing unit (134) and a storage unit (132), further comprising a communication module (136) for sending acquired data (DR4, DR5) to a backend server (320), and a bus interface (131) for receiving messages (CANB) that are transmitted via an internal communication bus (120) of the mobile device (10, 20), the computing unit (134) being configured to form a data series (DR) with the data (DR4, DR5) received in the messages (CANB), the computing unit (134) being configured to store the data series in the storage unit (132), the computing unit (134) being designed to carry out a preliminary analysis of the stored data series (DR) in the form of a data aggregation (P1 - P7), in which at least one region (KBDB) of interest of the data series (DR) is extracted and forwarded to the communication module (136), the communication module (136) being configured to transmit the at least one extracted region (KBDB) of the data series (DR) to the backend server (320), **characterized in that** the data aggregation (P1-P7) for extracting the region of interest includes a step (P2) of calculating the relative change (DR6) of a datum (DR5) in the data series (DR) compared to the previous datum in the data series and a step (P3) of assigning a marking (DR7) to a datum (DR5) in the data series (DR), the marking (DR7) being assigned to the particular nth datum (DR5) if the relative change (DR6) of the nth datum (DR5) in the data series (DR) compared to the n-1st datum (DR5) in the data series (DR), with n element of a natural number, is smaller than a minimum permissible reference value (RFW), the data aggregation (P1 - P7) including a step (P4) of counting the immediately consecutive marked data (DR4, DR5) in the data series (DR) at which the mobile device (10, 20) is still moving, the data aggregation (P1 - P7) including a step of determining the region (KBDB) in the data series (DR) in which a maximum number of immediately consecutive data (DR4, DR5) with the set marking (DR7) is contained, the communication module (136) being designed to send the region (KBDB) of the data series (DR) with the maximum number of immediately consecutive data (DR4, DR5) with the set marking (DR7) to the backend server (320).

2. Data acquisition device (130a, 130b) according to claim 1, wherein the computing unit (134) is designed to note the times (DR2) of reception of the received messages (CANB) in the data series (DR) in the data (DR4, DR5) of the particular received message (CANB).

3. Data acquisition device (130a, 130b) according to claim 1 or 2, wherein the communication module (136) is configured to receive at least one configuration message (CANCB), wherein the at least one configuration message (CANCB) contains a specification as to how the data (DR4, DR5) of a message (CANB) transmitted via the internal communication bus (120) are to be evaluated.

4. Data acquisition device (130a, 130b) according to claim 3, wherein the computing unit (134) is designed to compile the data series (DR) with the data (DR4, DR5) of the received messages (CANB) in accordance with the specification from the at least one configuration message (CANCB).

5. Data acquisition device (130a, 130b) according to any of the preceding claims, wherein the acquired data (DR4, DR5) relate to data (DR4, DR5) measured by sensors (114, 124) or data (DR6) calculated by computing units (100).

6. Data acquisition device (130a, 130b) according to any of the preceding claims, wherein the mobile device is a vehicle (10, 20) and the internal communication bus (120) is designed as a CAN bus of the vehicle (10, 20), corresponding to controller area network.

7. Data acquisition device (130a,) according to claim 6, wherein the vehicle corresponds to a towing vehicle (10) or a trailer vehicle (20) and the trailer vehicle (20) is equipped with a braking system (DBS).

8. Data acquisition device (130a) according to claim 7, wherein a brake control unit (100) is connected to the internal CAN bus (120) of the trailer vehicle (20), which brake control unit transmits, via the CAN bus, the data (DR4, DR5) from a number of brake pressure sensors (124) and/or wheel speed sensors (114) connected to the brake control unit (100).

9. Data acquisition device (130a) according to claim 8, wherein the specification in the at least one configuration message (CANCB) includes at least the message identifier (ID) of the CAN message (CANB) with which the measured brake pressure (DR5) of a brake pressure sensor (124) is transmitted and/or an indication of the minimum relative brake pressure change (DR6) that is still tolerable compared to the immediately preceding brake pressure value (DR5) in the data series (DR) in order to be able to assign the brake pressure value (DR5) to a region (KBDB) of relatively constant brake pressure (DR5).

10. Data acquisition device (130a) according to claim 8 or 9, wherein the specification in the at least one configuration message (CANCB) includes at least the message identifier (ID) of the CAN message (CANB) with which information (DR4) of a wheel speed sensor (124) is transmitted.

11. Method for carrying out a preliminary analysis in a data acquisition device (130a) according to any of the preceding claims, a data series (DR) being formed from data in messages (CANB) transmitted via an internal communication bus of a mobile device, the preliminary analysis fulfilling the function of a data aggregation (P1 - P7), **characterized in that** the data aggregation (P1-P7) includes a step (P2) of calculating the relative change (DR6) of the data (DR5) in the data series (DR) and a step (P3) of assigning a marking (DR7) to a datum (DR5) in the data series (DR), the marking (DR7) being assigned to the particular datum (DR5) if the relative change (DR6) of the nth datum (DR5) in the data series (DR) compared to the n-1st datum (DR5) in the data series (DR), with n element of a natural number, is smaller than a minimum permissible reference value (RFW), the data aggregation (P1 - P7) including a step (P4) of counting the immediately consecutive marked data (DR4, DR5) in the data series (DR) at which the mobile device (10, 20) is still moving, the data aggregation (P1 - P7) including a step of determining the region (KBDB) in the data series (DR) in which the maximum number of immediately consecutive data (DR4, DR5) with the set marking (DR7) is contained, the region (KBDB) of the data series (DR) with the maximum number of immediately consecutive data (DR4, DR5) with the set marking (DR7) being sent to a backend server (320).

12. Vehicle, **characterized in that** the vehicle (10, 20) is equipped with a device (130a) according to any of claims 1 to 10, in particular for carrying out a method according to claim 11, the vehicle corresponding to the mobile device.

13. Computer program, **characterized in that** the computer program is designed to carry out the steps of the method according to claim 11 when processed in a computing unit (134).

## Revendications

1. Dispositif d'acquisition de données (130a, 130b) pour des dispositifs mobiles (10, 20), comportant une unité de calcul (134) et une unité formant mémoire (132), présentant en outre un module de communication (136) pour l'envoi de données (DR4, DR5) acquises à un serveur dorsal (320), ainsi qu'une interface de bus (131) pour la réception de messages (CANB) qui sont transmis par l'intermédiaire d'un bus de communication interne (120) du dispositif mobile (10, 20), dans lequel l'unité de calcul (134) est configurée pour former une succession de données (DR) avec les données (DR4, DR5) acquises dans les messages (CANB), dans lequel l'unité de calcul (134) est configurée pour mémoriser la succession de données dans l'unité formant mémoire (132), dans lequel l'unité de calcul (134) est configurée pour exécuter une analyse préalable de la succession de données (DR) mémorisée sous la forme d'une agrégation de données (P1 - P7) dans laquelle au moins une plage (KBDB) d'intérêt de la succession de données (DR) est extraite et transférée au module de communication (136), dans lequel le module de communication (136) est configuré pour transmettre l'au moins une plage (KBDB) extraite de la succession de données (DR) au serveur dorsal (320), **caractérisé en ce que** l'agrégation de données (P1-P7) pour l'extraction de la plage d'intérêt contient une étape (P2) de calcul de la variation relative (DR6) d'une donnée (DR5) dans la succession de données (DR) par rapport à la donnée précédente dans la succession de données et contient une étape (P3) d'association d'un marqueur (DR7) à une donnée (DR5) dans la succession de données (DR), dans lequel le marqueur (DR7) est associé à la n-ième donnée (DR5) respective lorsque la variation relative (DR6) de la n-ième donnée (DR5) dans la succession de données (DR) par rapport à la n-1-ième donnée (DR5) dans la succession de données (DR), comportant n élément d'un nombre naturel, est inférieure à une valeur de référence (RFW) minimale admissible, dans lequel l'agrégation de données (P1 - P7) contient une étape (P4) de comptage des données (DR4, DR5) marquées immédiatement consécutives dans la succession de données (DR), étape dans laquelle, simultanément, le dispositif mobile (10, 20) est encore en mouvement, dans lequel l'agrégation de données (P1 - P7) contient une étape de détermination de la plage (KBDB) dans la succession de données (DR), plage dans laquelle est contenu un nombre maximal de données (DR4, DR5) immédiatement consécutives comportant le marqueur (DR7) placé, dans lequel le module de communication (136) est configuré pour envoyer la plage (KBDB) de la succession de données (DR) comportant le nombre maximal de données (DR4, DR5) immédiatement consécutives comportant le marqueur (DR7) placé au serveur dorsal (320).

2. Dispositif d'acquisition de données (130a, 130b) selon la revendication 1, dans lequel l'unité de calcul (134) est configurée pour conoter les instants (DR2) de réception des messages (CANB) reçus respectivement dans la succession de données (DR) avec les données (DR4, DR5) du message (CANB) reçu respectivement.

3. Dispositif d'acquisition de données (130a, 130b) selon la revendication 1 ou 2, dans lequel le module de communication (136) est configuré pour recevoir au moins un message de configuration (CANCB), dans lequel l'au moins un message de configuration (CANCB) contient une prescription sur la manière dont les données (DR4, DR5) d'un message (CANB) transmis par l'intermédiaire du bus de communication interne (120) doivent être évaluées.

4. Dispositif d'acquisition de données (130a, 130b) selon la revendication 3, dans lequel l'unité de calcul (134) est configurée pour établir la succession de données (DR) avec les données (DR4, DR5) des messages (CANB) reçus selon la prescription provenant de l'au moins un message de configuration (CANCB).

5. Dispositif d'acquisition de données (130a, 130b) selon l'une des revendications précédentes, dans lequel les données (DR4, DR5) acquises concernent des données (DR4, DR5) mesurées par des capteurs (114, 124) ou des données (DR6) calculées par des unités de calcul (100).

6. Dispositif d'acquisition de données (130a, 130b) selon l'une des revendications précédentes, dans lequel le dispositif mobile est un véhicule (10, 20) et le bus de communication interne (120) est réalisé sous forme de bus CAN du véhicule (10, 20), correspondant à Controller Area Network, c'est-à-dire réseau zonal de contrôleur.

7. Dispositif d'acquisition de données (130a,) selon la revendication 6, dans lequel le véhicule correspond à un véhicule tracteur (10) ou à un véhicule tracté (20) et le véhicule tracté (20) est pourvu d'un système de freinage (DBS).

8. Dispositif d'acquisition de données (130a) selon la revendication 7, dans lequel un appareil de commande de freinage (100) est connecté au bus CAN interne (120) du véhicule tracté (20), lequel appareil de commande transmet les données (DR4, DR5) d'un certain nombre de capteurs de pression de freinage (124) et/ou de capteurs de vitesse de rotation de roue (114) connectés à l'appareil de commande de freinage (100) par l'intermédiaire du bus CAN.

9. Dispositif d'acquisition de données (130a) selon la revendication 8, dans lequel la prescription contient dans l'au moins un message de configuration (CANCB) au moins l'identificateur de message (ID) du message CAN (CANB) avec lequel la pression de freinage (DR5) mesurée d'un capteur de pression de freinage (124) et/ou une indication sur la variation de pression de freinage (DR6) relative minimale sont transmises, laquelle variation de pression de freinage est encore tolérable par rapport à la valeur de pression de freinage (DR5) immédiatement précédente dans la succession de données (DR), afin de pouvoir encore associer la valeur de pression de freinage (DR5) à une plage (KBDB) de pression de freinage (DR5) relativement constante.

10. Dispositif d'acquisition de données (130a) selon la revendication 8 ou 9, dans lequel la prescription contient dans l'au moins un message de configuration (CANCB) au moins l'identifiant de message (ID) du message CAN (CANB) par lequel une information (DR4) d'un capteur de vitesse de rotation de roue (124) est transmise.

11. Procédé permettant l'exécution d'une analyse préalable dans un dispositif d'acquisition de données (130a) selon l'une des revendications précédentes, dans lequel une succession de données (DR) est formée à partir de données dans des messages (CANB) transmis par l'intermédiaire d'un bus de communication interne d'un dispositif mobile, dans lequel l'analyse préalable remplit la fonction d'agrégation de données (P1 - P7), **caractérisé en ce que** l'agrégation de données (P1 - P7) contient une étape (P2) de calcul de la variation relative (DR6) des données (DR5) dans la succession de données (DR) et une étape (P3) d'association d'un marqueur (DR7) à une donnée (DR5) dans la succession de données (DR), dans lequel le marqueur (DR7) est associé à la donnée (DR5) respective lorsque la variation relative (DR6) de la n-ième donnée (DR5) dans la succession de données (DR) par rapport à la n-1-ième donnée (DR5) dans la succession de données (DR), comportant n élément d'un nombre naturel, est inférieure à une valeur de référence (RFW) minimale admissible, dans lequel l'agrégation de données (P1 - P7) contient une étape (P4) de comptage des données (DR4, DR5) marquées immédiatement consécutives dans la succession de données (DR), étape dans laquelle, simultanément, le dispositif mobile (10, 20) est encore en mouvement, dans lequel l'agrégation de données (P1 - P7) contient une étape de détermination de la plage (KBDB) dans la succession de données (DR), plage dans laquelle est contenu le nombre maximal de données (DR4, DR5) immédiatement consécutives comportant le marqueur (DR7) placé, dans lequel la plage (KBDB) de la succession de données (DR) comportant le nombre maximal de données (DR4, DR5) immédiatement consécutives comportant le marqueur (DR7) placé est envoyée à un serveur dorsal (320).

12. Véhicule, **caractérisé en ce que** le véhicule (10, 20) est pourvu d'un dispositif (130a) selon l'une des revendications 1 à 10, en particulier pour l'exécution d'un procédé selon la revendication 11, dans lequel le véhicule correspond au dispositif mobile.

13. Programme informatique, **caractérisé en ce que** le programme informatique est configuré pour exécuter les étapes du procédé selon la revendication 11 lors d'un traitement dans une unité de calcul (134).
